# EUROPÄISCHE PATENTSCHRIFT

(11) **EP 0 720 829 B1**
(45) Veröffentlichungstag und Bekanntmachung des Hinweises auf die Patenterteilung: **25.03.1998**
(21) Anmeldenummer: 95116953.1
(22) Anmeldetag: 27.10.1995
(51) Int. Cl.: A47J 27/08, A47J 27/092

(54) **Garvorrichtung sowie Deckel für Gargefäss**
Cooking appliance and lid for a cooking vessel
Dispositif de cuisson et couvercle pour un récipient de cuisson

(30) Priorität: 05.01.1995 DE 29500125 U
(43) Veröffentlichungstag der Anmeldung: 10.07.1996
(73) Patentinhaber: SYNKRONA AG, 6370 Stans (CH)
(72) Erfinder: Schultz, Horst, D-65239 Hochheim (DE)
(74) Vertreter: Blumbach, Kramer & Partner GbR

(56) Entgegenhaltungen:
- EP-A- 0 491 324
- AT-A- 312 840
- DE-A- 2 534 709
- DE-A- 3 123 066
- DE-A- 3 232 907
- DE-A- 3 327 439

## Beschreibung

Die Erfindung betrifft einen Deckel für ein Gargefäß nach dem Oberbegriff des Anspruchs 1 sowie eine Garvorrichtung gemäß dem Oberbegriff des Anspruchs 10.

Erhöhten Innendruck einsetzenden Garvorrichtungen, insbesondere Dampfdrucktöpfen, wird zum Teil mit Zurückhaltung begegnet. Es besteht das Vorurteil, derartige Gargefäße seien kompliziert zu bedienen und, der durch Erhitzung der Speisen erhöhte Druck im Inneren bringe eine Gefährdung mit sich. Die in der Regel zwar unbegründete Angst vor Fehlbedienung und deren Folgen steht jedoch einer weiteren Verbreitung der zeit- und energiesparenden sowie nährwertschonenden Kochgeräte entgegen.

Zur Überwindung derartiger Vorurteile ist eine vereinfachte und sicherere Handhabung generell von hohem Interesse.

Es sind Dampfdrucktöpfe bekannt, bei welchen ein symmetrisch unterbrochener Randbereich des Gargefäßes in Form eines Bajonetts von seitlichen Umbördelungen des Deckels untergriffen wird. Eine in der Regel aus gummielastischem Material bestehende Dichtung ist dabei zwischen Deckel und Gargefäß angeordnet. Durch diese Dichtung, die stets sowohl am Gargefäß als auch am Deckel vollumfänglich anliegen muß, kommt es beim Schließen und Öffnen zu Reibungskräften, die üblicherweise durch die Hebelwirkung von seitlich weitausladenden stielförmigen Griffen überwunden werden. Hierdurch wird ohne langstielige Griffe entweder die Handhabung erschwert oder mit diesen der nötige Platzbedarf erhöht. Bajonette müssen generell winkelrichtig zusammengefügt werden und können darüberhinaus verkanten, welches insbesondere dann, wenn sich erhitzte Speisen in dem Gargefäß befinden, unangenehme Folgen haben kann. Die kantige, unterbrechende Form des Randbereiches des Gargefäßes erschwert das Reinigen.

Diese Nachteile von Bajonettverbindungen überwindet der Dampfdrucktopf der WO 91/18543 mittels seitlich am Deckel angeordneten Klauen, die von einem Bedienungselement in der Deckelmitte über einen komplizierten Hebelmechanismus so angesteuert werden, daß ein vollumfänglich ausgebildeter oberer Rand des Gargefäßes beim Schließen von der Seite her untergriffen wird. Um sämtliche Klauen synchron zu bewegen ist eine weitere mechanische Kopplung zwischen den Klauen vorgesehen. Nachteilig ist bei diesem Dampfdrucktopf jedoch, daß die sich schließenden Klauen durch Verschmutzungen in der letzten Schließphase behindert werden können und der insgesamt mechanisch aufwendige und in der Fertigung kostenintensive Aufbau.

Die DE 25 34 709 AS sowie die DE 31 23 066 C2 zeigen gattungsgemäße Deckel von Gargefäßen, die auf kostengünstige und mechanisch einfachere Weise die Nachteile von Bajonettverbindungen vermeiden. Diese im wesentlichen zusammen mit allen Gargefäßen mit umlaufendem seitlichem oberen Rand verwendbaren Deckel weisen jeweils auf der Seite oder außermittig angeordnete, dem Öffnen und Verschließen sowie der weiteren Handhabung dienende Griffe auf.

Insbesondere der Dampfdrucktopf gemäß der DE 31 23 066 C2 kann aber durch die außermittige Anordnung des Griffes ein unsicheres Gefühl bei dessen Handhabung vermitteln. Der nicht unter dem Griff liegende Schwerpunkt des Kochgerätes bewirkt eine Verkippung beim Anheben und erfordert zusätzliche Aufmerksamkeit beim Abstellen.

Die Form der Griffe beider vorstehend zitierter Dampfdrucktöpfe erzwingt eine Zweihandbedienung beim Öffnen und Schließen des jeweiligen auf das Gargefäß aufgesetzten Deckels. Der größere, am Deckel angebrachte Griff der DE 31 23 066 C2 kann nicht allein zum Öffnen und Schließen des Schließrings verwendet werden und auch die gegenüberliegend angeordneten Griffe des Dampfdrucktopfes aus der DE 25 34 709 erfordern eine haltende sowie eine öffnende Hand. Die erforderliche Zweihandbedienung kann beispielsweise bei gleichzeitigem Kochen auf mehreren Kochstellen sehr beschwerlich werden, da die öffnende Hand zumindest um den halben Außenumfang des Gargefäßes geführt werden muß und dann zwingend in die Nähe anderer unter Umständen erhitzter Gefäße gebracht wird.

Die zur Seite auskragende Anordnung der Griffe kostet darüberhinaus Platz beim Kochen und zusätzliche Stellfläche. Ähnliche Nachteile weist der in EP 0491 324 offenbarte Deckel auf, welcher zwei jeweils an einer Schwenkachse angelenkte Spannsegmente umfaßt die mit einem um eine senkrechte Achse verschwenkbaren Verschlußhebel verbunden sind. Die Bedienung dieses am Außenrand des Deckels angeordneten Verschlußhebels kann nur zweihändig ausgeführt werden, da andernfalls die Gefahr besteht, daß der Topf sich auf der Herdplatte verschiebt oder verkippt. Dies gilt ebenso für den in DE 3327439 offenbarten, zumindest zweigeteilten Deckel, bei welchem umgebörtelte Randabschnitte derart unter Gegenrandabschnitte des Topfes greifen, daß sie ein Abheben des Deckels verhindern und der Bedienungsgriff sich von der Mitte des Deckels radial zu einer Seite hin erstreckt.

Der Erfindung liegt die Aufgabe zugrunde, die vorstehend beschriebenen Nachteile zu lindern und insbesondere durch die sicherere und einfachere Handhabung eine erhöhte Akzeptanz zu schaffen.

Diese Aufgabe wird mit den Merkmalen der Ansprüche 1 und 10 gelöst.

Der hierdurch geschaffene kompakte Aufbau ohne seitlich hervorstehende Bedienungselemente gestattet weiterhin eine erleichterte sowie schnellere Handhabung. Es ist durch die beidseitige Befestigung des Halte- und Bedienungsgriffs eine Einhandbedienung beim Öffnen und Schließen des Schließrings allein von oben her möglich, und das geschlossene Gargefäß läßt sich auch im befüllten und erhitzten Zustand wesentlich sicherer handhaben. Der Schwerpunkt direkt unterhalb des Haltepunktes schließt ungewollte Kippbewegungen aus, und bei abgestelltem Gargefäß kann der Deckel leicht durch Drehen des Schließrings mittels des einzigen Griffelementes geöffnet und dann zur Seite abgenommen werden. Gegenüber Dampfdrucktöpfen mit Bajonettverbindung wird die Sicherheit des geschlossenen Gargefäßes durch die im wesentlichen vollumfängliche Untergreifung über 360° des äußeren Randes durch den Schließring erhöht. Die Anlage des Schließrings an einer metallischen Fläche des Deckels reduziert die Reibungskräfte beim Verdrehen des Schließrings gegenüber einem Metall/Gummikontakt.

Weist der Griff in seinem Mittenbereich zwei längliche, sich parallel erstreckende, bogenförmige Träger auf, die an ihren beiden Enden durch am Schließring befestigte Halteabschnitte miteinander verbunden sind, wobei zumindest einer der Halteabschnitte einen zur Deckelmitte gerichteten Vorsprung und der Deckel definierten Stellungen zugeordnete Symbole umfaßt, ist bereits mit einem Blick von oben zweifelsfrei zu erkennen, ob das Gargefäß korrekt geschlossen oder noch geöffnet ist. In vorteilhafter Weise zeigen entsprechende Piktogramme dem zur Deckelmitte gerichteten Vorsprung gegenüberliegend jeweils ein geschlossenes oder ein geöffnetes Gargefäß.

Die einfache sowie sichere Einhandbedienbarkeit wird unterstützt durch ein in einem der Halteabschnitte längsverschieblich angeordnetes Betätigungsorgan, das von oben her zugänglich ist und bei seinem Eindrücken auf ein in Schließstellung des Deckels darunterliegendes Ventil einwirkt. Hierdurch kann mit einem Finger der haltenden Hand das Abdampfen des Gargefäßes bewirkt werden.

Eine in diesem Halteabschnitt angeordnete Dampfauslaßöffnung zur Außenseite des Deckels hin vermeidet Verbrühungen durch heißen Dampf, da die bedienende Hand der Dampfaustrittsöffnung entfernt gelegen angeordnet sein wird.

Hebt ein mit dem Dichtelement des Ventils verbundener Körper bei unter Druck stehendem Gargefäß das Betätigungsorgan, wird durch dessen erhobene Stellung eine Druckanzeige und eine Warnung vor dem Öffnen gebildet. Durch das Eindrücken des Betätigungsorgans wird mit dem Verschwinden der Warnanzeige auch mittels des dabei erfolgenden Druckentlastens der Grund für die Warnung beseitigt. Für den Benutzer gilt, solange das Betätigungsorgan angehoben und somit sichtbar ist, ist es vor dem Öffnen auch zu betätigen.

Taucht der mit dem Dichtelement des Ventils verbundene, längliche Körper bei unter Druck stehendem Gargefäß in eine Ausnehmung ein, wodurch der Deckel gegen Öffnen verriegelt wird, ist auch ein nur unter geringem Druck stehendes Gargefäß nicht mehr zu öffnen. Unfälle durch vorzeitiges Öffnen und Austreten von heißen Gasen, die etwa bei verschmutzen, feuchter oder öliger Deckeldichtung möglich waren, werden ausgeschlossen. Erst ein korrekt belüftetes Gargefäß kann nach vollständigem Abbau des Überdrucks geöffnet werden.

Weist das Ventil einen federbelasteten Schieber auf, der mit einer Steuerfläche zumindest eines Halteabschnittes in Eingriff geraten kann, und gestattet dieser nur in vollständig geschlossener Stellung des Deckels das Schließen des Ventils, kann auch ein fehlerhaftes Schließen des Deckels nicht mehr zu einem gefährlichen Druckaufbau im Inneren der Garvorrichtung führen. Das weiterhin geöffnete Ventil führt Überdruck hörbar und warnend zur Seite ab.

Mit einem nasenartigen Vorsprung des Schiebers können die Steuerflächen beider Halteabschnitte Raststellungen ausbilden, die jeweils das vollständige Öffnen und vollständige Schließen des Deckels erfühlbar machen.

Vorzugsweise weist das den vorbeschriebenen Funktionen dienende Ventil in seinem Inneren ein zusätzliches Überdruckventil auf.

Bei dem erfindungsgemäßen Gargefäß ist somit durch das Zusammenwirken von Ventil, Griff und Betätigungsorgan eine gefährdende Fehlbedienung ausgeschlossen. Durch die logische Betätigungsabfolge, nur das warnend hervorgetretene Betätigungsorgan kann und soll vor dem Öffnen betätigt werden. Fehlstellungen des Griffs sind sichtbar, fühlbar und bei Erhitzen hörbar, jedoch nicht gefährdend, soll auch die Verwendung derartiger Garvorrichtungen, insbesondere von Dampfdrucktöpfen, stärkeren Anklang finden.

Die Erfindung wird nachstehend anhand der beigefügten Zeichnungen unter Bezugnahme auf eine bevorzugte Ausführungsform detailliert beschrieben.
Es zeigen:
- Fig. 1: einen Querschnitt entlang der Linie A-A aus Fig. 3 durch einen in geschlossener Stellung auf einem durchsichtigen Gargefäß angeordneten erfindungsgemäßen Deckel,
- Fig. 2: einen Querschnitt entlang der Linie A-A aus Fig. 3 durch einen in geöffneter Stellung vom Gargefäß abgenommenen Deckel,
- Fig. 3: eine teilweise aufgebrochene Darstellung eines Deckels in geschlossener Stellung von oben,
- Fig. 4: einen Querschnitt in Längsrichtung durch das Ventil in seiner geschlossenen Stellung und
- Fig. 5: eine Aufsicht von oben auf das Ventil mit einem Teil eines Halteabschnitt des Griffs.

Die Erfindung wird nachfolgend unter Bezugnahme auf das in den Figuren dargestellte Ausführungsbeispiel beschrieben.

In der bevorzugten Ausführungsform weist die insgesamt mit 1 bezeichnete als Dampfdrucktopf ausgebildete, erfindungsgemäße Garvorrichtung einen Deckel 2 sowie ein Gargefäß 3 auf. In dieser dichtet eine Lippendichtung 30 den Deckel 2 zum Gargefäß 3 hin fluiddicht ab.

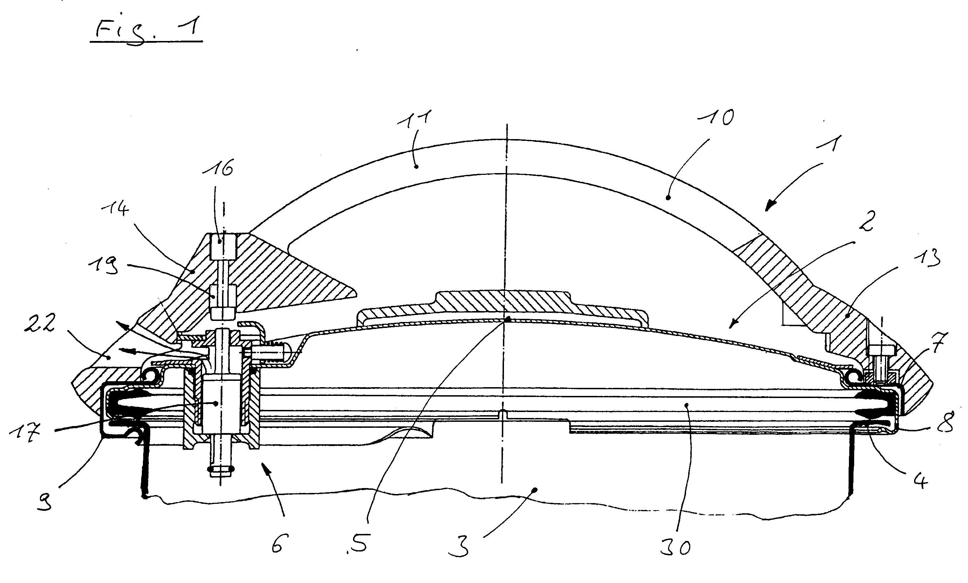

Ohne Beschränkung der Allgemeinheit ist die Erfindung durch den entsprechend ausgebildeten Deckel 2 jedoch bei beliebigen Gargefäßen 3 anwendbar, die einen oberen, zur Seite hin erweiterten, ringförmigen Rand 4 aufweisen. Zum besseren Verständnis ist dieses Gargefäß 3 in Fig. 1 transparent dargestellt.

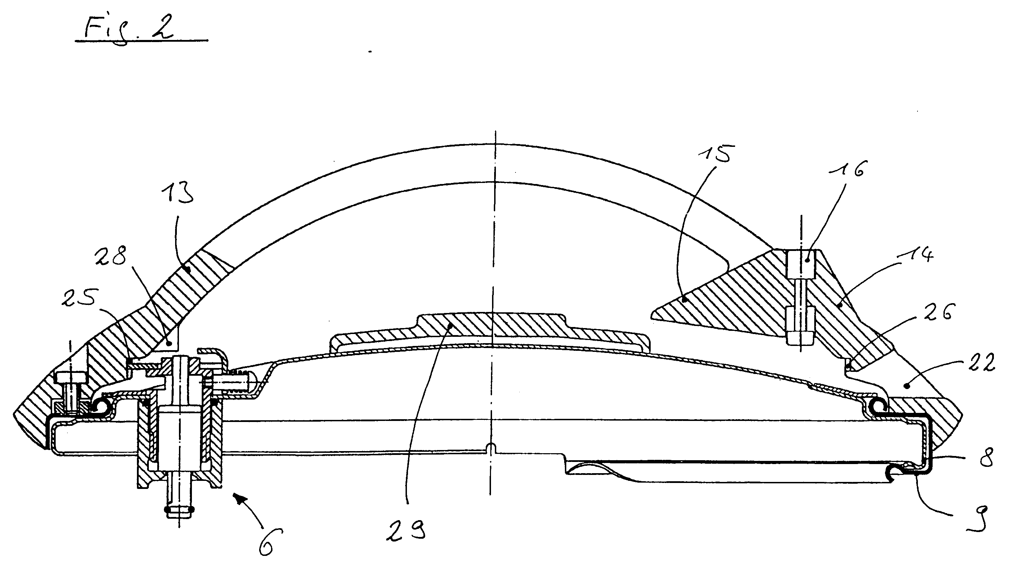

Der Deckel 2 umfaßt einen im wesentlichen kreisförmigen, leicht nach oben gewölbten Grundkörper 5, in welchem mit fluiddichtem Sitz ein Ventil 6 befestigt ist. Den Außenumfang des Grundkörpers 5 umgreifend ist ein Schließring 7 mit u-förmigem Profil drehbar am Grundkörper 5 gehalten. Über etwas weniger als den halben Außenumfang weist der Grundkörper 5 eine Umbördelung 8 auf, die in der in Fig. 2 gezeigten, geöffneten Stellung des Deckels 2 in etwa den halben Kreisumfang des seitlich erweiterten Randes 4 untergreifen kann.

In geöffneter Stellung wird der Deckel 2 seitlich auf das Gargefäß 4 aufgeschoben und nach Verdrehung mittels des an zumindest zwei Seiten am Schließring befestigten Griffs 10 um 180° untergreift die Umbördelung 9 des Schließrings 7 den größten Teil des verbleibenden Restes des Randes 4.

Der Griff 10 umfaßt in seinem Mittenbereich zwei längliche, sich parallel erstreckende, bogenförmige Träger 11, 12, die an ihren beiden Enden durch am Schließring 7 befestigte Halteabschnitte 13, 14 miteinander verbunden sind. Der Halteabschnitt 14 weist einen zur Deckelmitte gerichteten Vorsprung 15 auf, der je nach Stellung auf zugeordnete Piktogramme deutet, welche durch den Freiraum zwischen den Trägern 11, 12 von oben her deutlich sichtbar sind.

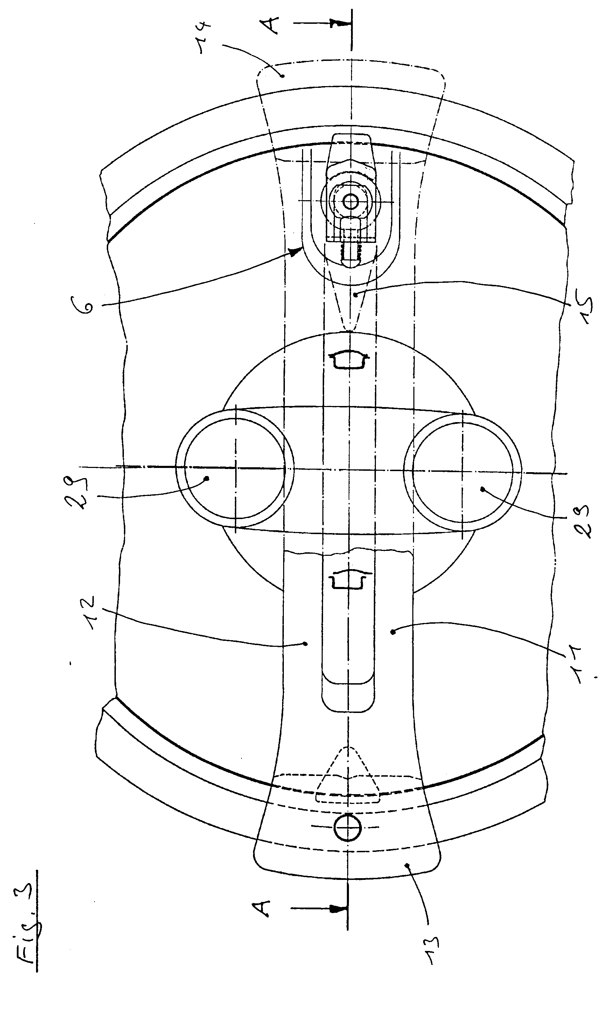

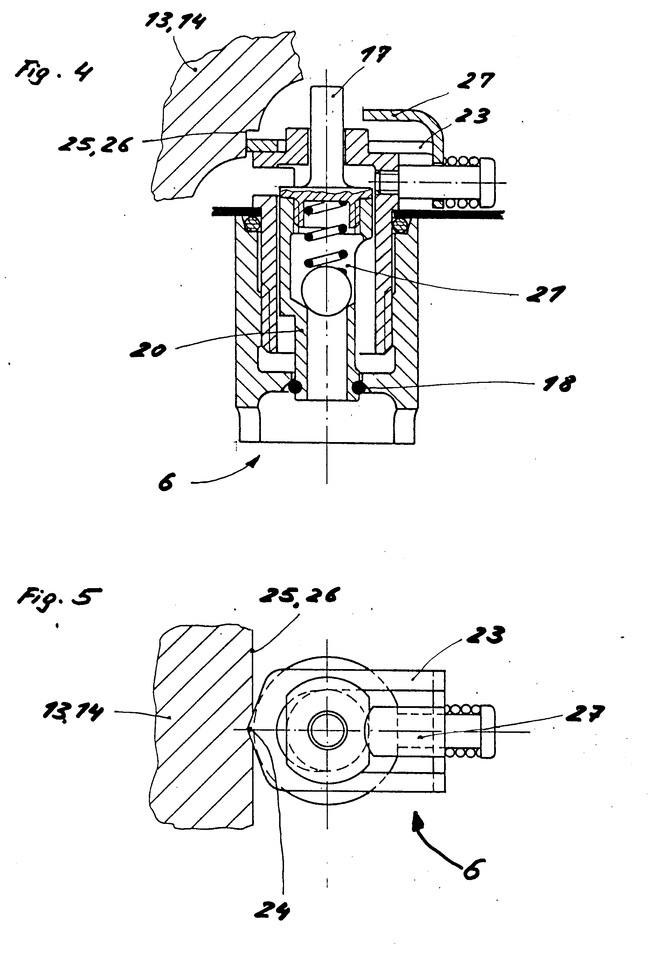

Im Halteabschnitt 14 ist ein Betätigungsorgan 14 längsverschieblich durch sein eigenes Gewicht in der unteren Endstellung gehalten. In geschlossener Stellung des Deckels befindet sich das Betätigungsorgan 16 in etwa über dem Ventil 6, von welchem es bei Druckerhöhung im Inneren der Garvorrichtung 1 in seine obere Endstellung gehoben wird. Der mit dem Dichtelement 18 versehene Ventilkörper 17 ist ein im wesentlichen zylindrischer, länglicher Körper, wird bei Druckerhöhung durch anfänglich entweichende, an diesem vorbeistreichende Gase angehoben und taucht hierbei in die vom Betätigungselement 16 freigegebene Ausnehmung 19 ein. Das Betätigungsorgan kann farblich auffällig gestaltet sein, so daß durch sein Hervortreten eine entsprechende Signalwirkung erreicht wird. Sein Eindrücken bewirkt das Zurücktreten des Ventilkörpers 17, öffnet somit das Ventil aus der in Fig. 4 vergrößert dargestellten Schließstellung und gestattet durch eine seitlich angebrachte Vertiefung 20 sowie den verbleibenden Freiraum zwischen Ventilkörper 17 und Ventilgehäuse den seitlichen Austritt von Gasen zu der im Halteabschnitt 14 angeordneten Dampfaustrittsöffnungen 22, wie in Fig. 1 dargestellt.

Innerhalb des Ventilkörpers 17 ist vorzugsweise ein Überdruckventil 21 angeordnet, das in an sich bekannter Weise durch eine mittels einer Feder vorgespannte Kugel oberhalb einer Durchgangsbohrung durch den Ventilkörper 17 zum Inneren der Garvorrichtung gebildet wird.

Am Ventil 6 ist ein unter Federspannung stehender Schieber 23 seitlich verschiebbar gehalten. Der Schieber 23 weist einen nasenartigen Vorsprung 24 auf, der federbelastet an Steuerflächen 25, 26 der Halteabschnitte 13, 14 entlanggleitet. Die Steuerflächen 25, 26 weisen, wie in Fig. 5 dargestellt, jeweils dem vollständigen Schließen oder der vollständigen Öffnung zugeordnete, Raststellungen ausbildende Einsenkungen auf. Durch die Steuerfläche 26 wird der Schieber 23 so nach hinten verschoben, daß die ansonsten den Ventilkörper 17 übergreifende Lasche 27 diesen nach oben freigibt.

Zwischen diesen definierten Endstellungen, somit zwischen vollständigem Schließen und vollständigem Öffen, tritt die Lasche 27 federvorgespannt über den Ventilkörper 17, so daß selbst bei Druckaufbau innerhalb der Garvorrichtung 1 das Ventil 6 nicht schließt. In der in Fig. 2 gezeigten, vollständig geöffneten Stellung verhindert ein Vorsprung 28 das Schließen des Ventils 6.

In an sich bekannter Weise kann der Deckel 2 weitere Armaturen 29, wie beispielsweise Druck- oder Temperatur-Anzeigen, umfassen.

In alternativen Ausgestaltung kann zusätzlich zum Überdruckventil 21 oder statt diesem ein anderes Überdruckventil am Deckel 2 angebracht sein.

## Patentansprüche

1. Deckel (2) für ein Gargefäß (3), insbesondere für einen Dampfdrucktopf, mit einem umlaufenden, sich zur Seite hin erstreckenden oberen Rand (4), wobei der Deckel (2) in aufgesetzter, jedoch geöffneter Stellung zumindest einen Teil des Randes untergreift und beim Schließen mittels eines eine seitliche Umbördelung (9) aufweisenden drehbaren Schließrings (7) im wesentlichen den verbleibenden Teil des Randes untergreift, bei welchem vorzugsweise eine fluiddichte Ringdichtung (30) den Deckel (2) zum Gargefäß (3) abdichtet, gekennzeichnet durch einen Halte- und Bedienungsgriff (10), der sich in etwa über den gesamten Durchmesser des Deckels (2) erstreckt und an zwei gegenüberliegenden Seiten mit dem Schließring (7) verbunden ist.

2. Deckel nach Anspruch 1, dadurch gekennzeichnet, daß der Halte- und Bedienungsgriff (10) in seinem Mittenbereich zwei längliche, sich parallel erstreckende bogenförmige Träger (11, 12) aufweist, die an ihren beiden Enden durch am Schließring (7) befestigte Halteabschnitte (13, 14) miteinander verbunden sind, wobei zumindest einer der Halteabschnitte (14) einen zur Deckelmitte gerichteten Vorsprung (15) und der Deckel (2) definierten Stellungen zugeordnete Symbole aufweist.

3. Deckel nach Anspruch 1 oder 2, dadurch gekennzeichnet, daß in einem der Halteabschnitte (14) ein Betätigungsorgan (16) längsverschieblich und von oben her zugänglich angeordnet ist, das bei seinem Eindrücken auf ein in Schließstellung des Deckels darunterliegendes Ventil (6) einwirkt, um das Druckentlasten des Gargefäßes (3) zu bewirken.

4. Deckel nach einem der Ansprüche 1 bis 3, dadurch gekennzeichnet, daß in dem auf der Seite des Betätigungsorgans (6) gelegenen Halteabschnitt (14) eine Dampfauslaßöffnung (22) zur Außenseite des Deckels (2) hin angeordnet ist.

5. Deckel nach Anspruch 3 oder 4, dadurch gekennzeichnet, daß ein mit einem Dichtelement (18) des Ventils (6) verbundener länglicher Körper (17) bei unter Druck stehendem Gargefäß (3) das Betägigungsorgan (16) hebt.

6. Deckel nach Anspruch 5, dadurch gekennzeichnet, daß der längliche Körper (17) bei unter Druck stehendem Gargefäß (3) in eine Ausnehmung (19) taucht, wodurch der Deckel (2) gegen Öffnen verriegelt ist.

7. Deckel nach einem der Ansprüche 1 bis 6, dadurch gekennzeichnet, daß das Ventil (6) einen federbelasteten Schieber (23) aufweist, der mit einer Steuerfläche (25, 26) zumindest eines Halteabschnittes (13, 14) in Eingriff geraten kann und nur in vollständig geschlossener Stellung des Deckels (2) das Schließen des Ventils (6) gestattet.

8. Deckel nach Anspruch 7, dadurch gekennzeichnet, daß der Schieber (23) einen nasenartigen Vorsprung aufweist und die Steuerflächen (25, 26) beider Halteabschnitte (13, 14) Raststellungen ausbilden, die jeweils einer vollständigen Öffnung und einem vollständigen Schließen des Deckels (2) zugeordnet sind.

9. Deckel nach Anspruch 8, dadurch gekennzeichnet, daß in vollständig geöffneter Stellung des Schließrings (7) ein Vorsprung (28) am Halteabschnitt (13) das Schließen des Ventils (6) verhindert.

10. Garvorrichtung, insbesondere Dampfdrucktopf, mit einem Gargefäß, gekennzeichnet durch einen Deckel (2) nach einem der Ansprüche von 1 bis 9.

## Claims

1. A lid (2) for a cooking pot (3), more particularly for a pressure cooker, comprising a peripheral upper edge (4) extending sideways, wherein the lid (2) when fitted but in the open position extends under at least a part of the edge and, when closed by a rotatable ring (7) having a lateral flange (9), extends substantially under the remaining part of the edge, and wherein at least one fluid-tight ring seal (30) seals the lid (2) from the cooking pot (3), characterised by a holding and operating handle (10) which extends substantially over the entire diameter of the lid (2) and is connected to the closing ring (7) at two opposite sides.

2. A lid according to claim 1, characterised in that the holding and operating handle (10), in its middle region, has two elongate parallel arcuate supports (11, 12) which are interconnected at both ends by holding portions (13, 14) secured to the closing ring (7), wherein at least one holding portion (14) has a projection (15) directed towards the middle of the lid, and the lid (2) bears symbols associated with defined positions.

3. A lid according to claim 1 or 2, characterised in that an actuating means (16) is disposed in longitudinally movable manner in one of the holding portions (14) and is accessible from above and, when pressed, acts on a valve (6) disposed under the lid in the closed position, so as to relieve pressure in the pot (3).

4. A lid according to any of claims 1 to 3, characterised in that in the holding portion (14) disposed on the side of the actuating means (6), an opening (22) for discharging steam is provided near the outer edge of the lid (2).

5. A lid according to claim 3 or 4, characterised in that an elongate member (17) connected to an element (18) for sealing the valve (6) lifts the actuating means (16) when the cooking pot (3) is under pressure.

6. A lid according to claim 5, characterised in that when the cooking pot (3) is under pressure, the elongate member (17) penetrates into a recess (19), thus locking the lid (2) and preventing it from opening.

7. A lid according to any of claims 1 to 6, characterised in that the valve (6) has a spring-loaded slide (23) which can engage a control surface (25, 26) on at least one holding portion (13, 14) and allows the valve (6) to close only when the lid (2) is in the completely closed position.

8. A lid according to claim 7, characterised in that the slide (23) has a lug-like projection and the control surfaces (25, 26) of both holding portions (13, 14) form catch positions associated respectively with complete opening and complete closing of the lid (2).

9. A lid according to claim 8, characterised in that when the closing ring (7) is in the completely open position, a projection (28) on the holding portion (13) prevents the valve (6) from closing.

10. A cooking device, particularly a pressure cooker, comprising a cooking pot, characterised by a lid (2) according to any of claims 1 to 9.

## Revendications

1. Couvercle (2) pour un récipient de cuisson (3), en particulier pour une cocotte à vapeur sous pression, comportant un bord supérieur (4) sur tout le tour, s'étendant en direction du côté, le couvercle (2), en position de mise en place, mais cependant d'ouverture, passant sous au moins une partie du bord et, lors de la fermeture au moyen d'un anneau de fermeture (7) susceptible de tourner et présentant un repli latéral (9), passant sensiblement sous la partie restante du bord, dans lequel couvercle (2), de préférence un joint annulaire (30) étanche aux fluides établit une étanchéité entre le couvercle (2) et le récipient de cuisson (3), caractérisé par une poignée (10) de maintien et de manoeuvre, qui s'étend sur approximativement l'ensemble du diamètre du couvercle (2) et est reliée à l'anneau de fermeture (7) sur deux côtés opposés.

2. Couvercle selon la revendication 1, caractérisé en ce que la poignée (10) de maintien et de manoeuvre présente dans sa zone médiane deux portants (11, 12) oblongs, de forme arquée, s'étendant parallèlement, qui sont reliés entre eux à leurs deux extrémités par des sections de maintien (13, 14) fixées à l'anneau de fermeture (7), au moins une des sections de maintien (14) présentant une saillie (15) orientée vers le milieu du couvercle et le couvercle (2) présentant des symboles affectés à des positions définies.

3. Couvercle selon la revendication 1 ou 2, caractérisé en ce que dans une des sections de maintien (14) est disposé un organe d'actionnement (16) susceptible de coulisser dans le sens longitudinal et accessible à partir du haut, qui agit, lorsqu'il est enfoncé, sur une valve (6) située en-dessous de lui lorsque le couvercle est en position de fermeture, pour provoquer la détente de la pression du récipient de cuisson (3).

4. Couvercle selon l'une des revendications 1 à 3, caractérisé en ce que dans la section de retenue (14) située sur le côté de l'organe d'actionnement (6) est disposée une ouverture (22) d'évacuation de vapeur en direction du côté extérieur du couvercle (2).

5. Couvercle selon la revendication 3 ou 4, caractérisé en ce qu'un corps oblong (17) relié à un élément d'étanchéité (18) de la valve (6) soulève l'organe d'actionnement (16) lorsque le récipient de cuisson (3) est sous pression.

6. Couvercle selon la revendication 5, caractérisé en ce que le corps oblong (17) pénètre dans un évidement (19) lorsque le récipient de cuisson (3) est verrouillé à l'encontre de l'ouverture.

7. Couvercle selon l'une des revendications 1 à 6, caractérisé en ce que la valve (6) présente un curseur (23) mis sous la contrainte d'un ressort, qui peut entrer en contact avec une surface de commande (25, 26) d'au moins une section de maintien (13, 14) et qui n'autorise la fermeture de la valve (6) que lorsque le couvercle (2) est en position de fermeture complète.

8. Couvercle selon la revendication 7, caractérisé en ce que le curseur (23) présente une saillie analogue à une dent et en ce que les surfaces de commande (25, 26) des deux sections de maintien (13, 14) forment des emplacements d'encliquetage qui sont respectivement affectés à une position d'ouverture complète et à une position de fermeture complète du couvercle (2).

9. Couvercle selon la revendication 8, caractérisé en ce que lorsque l'anneau de fermeture (7) est en position d'ouverture complète, une saillie (28) de la section de maintien (13) empêche la fermeture de la valve (6).

10. Dispositif de cuisson, en particulier cocotte à vapeur sous pression, comportant un récipient de cuisson, caractérisé par un couvercle (2) selon l'une des revendications 1 à 9.
